# EUROPÄISCHE PATENTANMELDUNG

(11) **EP 4 290 192 A1**
(43) Veröffentlichungstag der Anmeldung: **13.12.2023**
(21) Anmeldenummer: 22178491.1
(22) Anmeldetag: 10.06.2022
(51) Int. Cl.: G01F 23/284, H04B 1/00

(54) **VERFAHREN ZUM AUSWÄHLEN EINES BETRIEBS-KANALS FÜR EINE MIKROWELLENSCHRANKE**

(71) Anmelder: VEGA Grieshaber KG, 77709 Wolfach (DE)
(72) Erfinder: SCHULTHEISS, Daniel, 78132 Hornberg (DE)
(74) Vertreter: Maiwald GmbH

(57) **Zusammenfassung**

Es wird ein Verfahren zum Auswählen eines Betriebs-Kanals für eine erste Mikrowellenschranke (100), aufweisend eine Mikrowellen-Sendeeinheit (104) und eine Mikrowellen-Empfangseinheit (102), vorgeschlagen mit:
- Bereitstellen einer Vielzahl verfügbarer Frequenz-Kanäle (202) für Mikrowellenschranken;
- Bestimmen einer Fremdsignal-Amplitude für zumindest einen Frequenz-Kanal der Vielzahl der verfügbaren Frequenz-Kanäle mittels der Mikrowellen-Empfangseinheit (102);
- Bestimmen eines Betriebs-Kanals aus den verfügbaren Frequenz-Kanälen (202), basierend auf der zumindest einen bestimmten Fremdsignal-Amplitude der verfügbaren Frequenz-Kanäle (202), um Störungen bei einem Betreiben der ersten Mikrowellenschranke (100) durch ein Fremdsignal zu vermindern; und
- Übertragen des bestimmten Betriebs-Kanals von der Mikrowellen-Empfangseinheit (102) an die Mikrowellen-Sendeeinheit (104), zum Betreiben der ersten Mikrowellenschranke (100) auf dem Betriebs-Kanal.

## Beschreibung

### Gebiet der Erfindung

Die Erfindung betrifft ein Verfahren zum Auswählen eines Betriebs-Kanals für eine Mikrowellenschranke und eine Mikrowellenschranke.

### Hintergrund

Eine Mikrowellenschranke sendet typischerweise ein Dauerstrich-Mikrowellensignal in Richtung eines zugeordneten Empfängers aus. Wird der direkte Übertragungsweg von Sender zu Empfänger durch ein Objekt oder durch einen Füllstand in einem Behälter unterbrochen, macht sich dies durch einen fehlenden oder reduzierten Empfangspegel im Empfänger bemerkbar. Das Abfallen des Empfangspegels kann in dem Empfänger detektiert werden und in ein Schaltsignal umgewandelt werden. Um eine Richtung zu bestimmen, aus welcher ein Objekt die Schranken passiert, kann beispielsweise ein System mit nur einem Senderund zwei Empfängern oder zwei komplett unabhängig voneinander arbeitende Mikrowellenschranken verwendet werden. Passiert ein Objekt die so aufgebauten Schranken, kann aus der Reihenfolge der Passage eine Richtung bestimmt werden.

### Offenbarung der Erfindung

Werden die beiden Empfänger in einem System aus mehreren Mikrowellenschranken in geringem räumlichen Abstand voneinander betrieben, kann Mikrowellenstrahlung von einer Mikrowellen-Sendeeinheit einer Mikrowellenschranke eine Empfangseinheit einer benachbarten weiteren Mikrowellenschranke stören. Dies kann eine Empfindlichkeit und damit auch einen Störabstand, bzw. Signal-Rauschabstand, der einzelnen Empfangseinheit reduzieren. Darüber hinaus kann auch durch andere Mikrowellen-Störquellen der Störabstand reduziert werden. Ein solcher reduzierter Störabstand kann in einem Anstieg einer Wahrscheinlichkeit für Fehlschaltungen der betroffenen Mikrowellenschranke resultieren.

Eine Störbeeinflussung durch Mikrowellen-Sendeeinheiten in nicht zu der Mikrowellenschranke zugehörige, d.h. fremde Empfangseinheiten, kann sich mit der Anzahl der Mikrowellenschranken verstärkt auswirken. Um beispielsweise eine Position eines Objektes in einem Raum oder einen Füllstand in einem Behälter zu bestimmen, können allerdings mehr als zwei Mikrowellenschranken in geringem räumlichen Abstand zueinander notwendig sein.

Gemäß Aspekten der Erfindung wird ein Verfahren zum Auswählen eines Betriebs-Kanals für eine Mikrowellenschranke, eine Mikrowellenschranke, ein Computerprogramm, ein computerlesbarer Datenträger und eine Verwendung einer Mikrowellenschranke gemäß den Merkmalen der unabhängigen Ansprüche, vorgeschlagen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist. Der Fachmann wird aber erkennen, dass viele der Verfahrensschritte auch in einer anderen Reihenfolge durchlaufen werden können und zu dem gleichen Ergebnis führen. In diesem Sinne kann die Reihenfolge der Verfahrensschritte entsprechend geändert werden und ist somit auch offenbart.

Gemäß einem Aspekt wird ein Verfahren zum Auswählen eines Betriebs-Kanals für eine erste Mikrowellenschranke vorgeschlagen, wobei die erste Mikrowellenschranke eine Mikrowellen-Sendeeinheit und eine Mikrowellen-Empfangseinheit aufweist, die insbesondere räumlich voneinander getrennt sind.

Das Verfahren weist die folgenden Schritte auf:
- Bereitstellen einer Vielzahl verfügbarer Frequenz-Kanäle für Mikrowellenschranken;
- Bestimmen einer Fremdsignal-Amplitude für zumindest einen Frequenz-Kanal der Vielzahl der verfügbaren Frequenz-Kanäle mittels der Mikrowellen-Empfangseinheit;
- Bestimmen eines Betriebs-Kanals, ausgewählt aus den verfügbaren Frequenz-Kanälen, und basierend auf der zumindest einen bestimmten Fremdsignal-Amplitude der verfügbaren Frequenz-Kanäle, um Störungen bei einem Betreiben der ersten Mikrowellenschranke durch ein Fremdsignal zu minimieren; und
- Übertragen des bestimmten Betriebs-Kanals von der Mikrowellen-Empfangseinheit an die Mikrowellen-Sendeeinheit, zum Betreiben der ersten Mikrowellenschranke auf dem Betriebs-Kanal.

Die erste Mikrowellenschranke kann eine Mikrowellen-Sendeeinheit aufweisen, die ein Mikrowellen-Signal generiert und in Richtung auf die Empfangseinheit ausstrahlt, und eine räumlich davon getrennte Mikrowellen-Empfangseinheit aufweisen, die jeweils einander zugeordnet sind. Zwischen der Mikrowellen-Sendeeinheit und der zugeordneten Empfangseinheit kann ein Kopplungs-Pfad definiert werden, der den räumlichen Bereich charakterisiert, in dem die Mikrowellen-Sendeeinheit und die Mikrowellen-Empfangseinheit mittels des Mikrowellen-Signals betriebsmäßig gekoppelt sind. Wird der direkte Übertragungsweg im Kopplungs-Pfad von der Mikrowellen-Sendeeinheit zu der Mikrowellen-Empfangseinheit durch ein Objekt und/oder durch einen Füllstand eines Mediums in einem Behälter unterbrochen, macht sich dies durch einen fehlenden Empfangspegel oder einen reduzierten Empfangspegel des Mikrowellen-Signals in der Mikrowellen-Empfangseinheit bemerkbar. Das Abfallen des Empfangspegels kann in der Mikrowellen-Empfangseinheit detektiert werden und beispielsweise in ein Schaltsignal, insbesondere zur Prozessüberwachung, umgewandelt werden.

Dabei ist das Mikrowellen-Signal ein Signal, das auf der jeweiligen Mikrowellen-Frequenz der jeweiligen Mikrowellenschranke basiert und von der Mikrowellen-Sendeeinheit ausgesendet wird und von der jeweiligen Mikrowellen-Empfangseinheit empfangen wird, um eine Dämpfung des Mikrowellen-Signals im Kopplungs-Pfad, insbesondere mittels der jeweiligen Mikrowellen-Empfangseinheit, zu bestimmen, um beispielsweise eine Anwesenheit eines Objektes innerhalb des Kopplungspfades zu detektieren.

Die jeweilige Mikrowellen-Sendeeinheit einer jeweiligen Mikrowellenschranke kann eingerichtet sein, insbesondere mittels einer elektrischen Abstimmung eines Mikrowellen-Generators der Mikrowellen-Sendeeinheit, mit einer wählbaren Mikrowellen-Frequenz betrieben zu werden. Zusätzlich oder alternativ kann die jeweilige Mikrowellen-Empfangseinheit einer jeweiligen Mikrowellenschranke eingerichtet sein, insbesondere mittels einer elektrischen Abstimmung eines Mikrowellen-Generators der Mikrowellen-Empfangseinheit, mit einer wählbaren Mikrowellen-Frequenz betrieben zu werden, um ein von der Empfangseinheit empfangenes Mikrowellen-Signal selektiv, insbesondere in Bezug auf einen Mikrowellen-Frequenz-Kanal, für einen Betrieb der Mikrowellenschranke auszuwerten und/oder zu bestimmen.

Dadurch kann die erste Mikrowellenschranke eingerichtet sein, mit dem Betriebs-Kanal betrieben zu werden und den Betriebs-Kanal aus Fremdsignalen herauszufiltern, um eine Störung der ersten Mikrowellenschranken durch Fremdsignale zu vermindern. Eine solche Selektion des Mikrowellen-Frequenz-Kanals kann durch die Mikrowellen-Empfangseinheit mittels eines Zwischenfrequenz-Filters durchgeführt werden.

Eine Anwesenheit eines Objektes innerhalb des Kopplung-Pfads kann bestimmt werden, indem, abhängig von einer Interaktion des Objekts in einem Kopplungs-Pfad zwischen der Mikrowellen-Sendeeinheit und der Mikrowellen-Empfangseinheit, eine Dämpfung des Mikrowellen-Signals, basierend auf der jeweiligen Mikrowellen-Frequenz der jeweiligen Mikrowellenschranke, detektiert wird.

Fremdsignale können Signale sein, die von der Mikrowellen-Empfangseinheit detektiert werden und beispielsweise von einer weiteren Mikrowellen-Sendeeinheit einer weiteren Mikrowellenschranke und/oder von einer anderen Mikrowellen-Quelle generiert werden. Diese Fremdsignale können insbesondere durch eine, mittels der Mikrowellen-Empfangseinheit bestimmten, Fremdsignal-Amplitude charakterisiert werden. Um Störungen, insbesondere des zuverlässigen Betriebes der betreffenden Mikrowellenschranke, zu minimieren und somit den Störabstand bzw. den Signal-Rauschabstand möglichst groß zu machen, sollte die Fremdsignal-Amplitude in dem bestimmten Betriebs-Kanal möglichst klein sein.

Ein verfügbarer Frequenzbereich, der von Mikrowellenschranken benutzt werden kann, beschränkt sich im Allgemeinen auf lizenzfreie Frequenzbänder, die in Europa für lizenzfreie. "Short-Range Devices" reguliert sind. Für die Anwendung der jeweiligen Mikrowellenschranke sinnvoll nutzbare Frequenzbänder liegen beispielsweise im Bereich von 2,4 GHz bis 2,4835 GHz; und/oder 5,725 GHz bis 5,875 GHz; und/oder 24 GHz bis 24,25 GHz; und/oder 57 bis 64 GHz; und/oder 61 GHz bis 61,5 GHz; und/oder 122 GHz bis 123 GHz; 174,8 GHz bis 182 GHz; und/oder 185 GHz bis 190 GHz; und/oder 231,5 GHz bis 250 GHz und/oder 244 GHz bis 246 GHz.

Die zur Verfügung stehenden und oben angegebenen Frequenzbänder sind typischerweise ausreichend breit, um darin Mikrowellen-Frequenz-Kanäle für eine Vielzahl von Mikrowellenschranken zu definieren.

Beispielsweise kann das Frequenzband von 24 GHz bis 24,25 GHz mit einer Anzahl von Mikrowellen-Frequenz-Kanälen n = 20 zwischen einer unteren Frequenz fu= 24 GHz und einer oberen Frequenz fo = 24,25 GHz Mikrowellen-Frequenz-Kanäle der Breite Δf = 12,5 MHz definiert werden.

Durch eine Verteilung einer Vielzahl von Mikrowellen-Frequenz-Kanälen auf eine Vielzahl von Mikrowellenschranken kann eine gegenseitige Störbeeinflussung der jeweiligen Mikrowellenschranken in einem System aus Mikrowellenschranken, entsprechend einer Anwendung eines Frequenz-Multiplexverfahrens (FDM = Frequency-Division Multiplexing), verringert werden.

In einem solchen System aus Mikrowellenschranken kann eine Störbeeinflussung von mehreren Mikrowellenschranken verringert werden, die benachbart, insbesondere in geringem Abstand zueinander, betrieben werden. Denn bei benachbart betriebenen Mikrowellenschranken kann eine Mikrowellen-Sendeeinheit in eine Empfangseinheit einer benachbarten Mikrowellenschranke einstrahlen. Durch unterschiedliche Mikrowellen-Frequenz-Kanäle für unterschiedliche Mikrowellenschranken in einem Mikrowellenschranken-System können Störabstände der einzelnen Mikrowellenschranken erhöht werden, da die jeweilige Mikrowellenschranke mittels der Empfangseinheit das jeweils von der Mikrowellen-Sendeeinheit ausgestrahlte Mikrowellen-Signal selektiv, entsprechend dem zugeordneten Mikrowellen-Frequenz-Kanal, bestimmen kann, was wiederum eine Wahrscheinlichkeit und eine Häufigkeit von Fehlschaltungen in dieser speziellen Konstellation in dem Mikrowellenschranken-System reduziert.

Der Betriebs-Kanal ist dann der Mikrowellen-Frequenz-Kanal, der bestimmt wurde um Störungen durch ein Fremdsignal zu minimieren und mit dem die Mikrowellenschranke betrieben wird.

Der verfügbare Frequenzbereich für die jeweilige Mikrowellenschranke kann dadurch bereitgestellt werden, dass er aus einem Speicherbereich der jeweiligen Mikrowellenschranke abgerufen wird und/oder für einen Betrieb der jeweiligen Mikrowellenschranke mittels eines Interfaces bereitgestellt wird.

Zum Übertragen des bestimmten Betriebs-Kanals von der Mikrowellen-Empfangseinheit an die Mikrowellen-Sendeeinheit kann die erste Mikrowellenschranke eine Kommunikationseinheit aufweisen, um die Mikrowellen-Empfangseinheit mit der Mikrowellen-Sendeeinheit monodirektional und/oder bidirektional zu koppeln. Mittels der Mikrowellen-Empfangseinheit kann der Betriebs-Kanal bestimmt werden und mittels der Kommunikationseinheit kann der bestimmte Betriebs-Kanal von der Mikrowellen-Empfangseinheit an die Mikrowellen-Sendeeinheit übertragen werden. Dabei kann die Kommunikationseinheit zumindest zwei Kommunikations-Teileinheiten aufweisen, wobei die Mikrowellen-Empfangseinheit eine Kommunikations-Teileinheit aufweist und die Mikrowellen-Sendeeinheit die zweite Kommunikations-Teileinheit aufweist, die jeweils für die Übertragung des bestimmten Betriebs-Kanals von der Mikrowellen-Empfangseinheit an die Mikrowellen-Sendeeinheit eingerichtet sind.

Für das Bestimmen des Betriebs-Kanals kann die Mikrowellen-Empfangseinheit die jeweilige Fremdsignal-Amplitude für zumindest einen Teil der Vielzahl der verfügbaren Frequenz-Kanäle bestimmen, um Störungen bei dem Betreiben der ersten Mikrowellenschranke durch Fremdsignale zu minimieren. Beispielsweise kann derjenige verfügbare Frequenz-Kanal als Betriebs-Kanal ausgewählt werden, der eine möglichst geringe Fremdsignal-Amplitude aufweist. Dazu kann die erste Mikrowellenschranke eingerichtet sein, eine Sequenz zum Aktivieren der ersten Mikrowellenschranke zu durchlaufen, die als Startsequenz und/oder zeitlich zyklisch wiederholt durchlaufen werden kann. Die Mikrowellen-Empfangseinheit kann eingerichtet sein, in einer Phase der Sequenz zum Aktivieren die jeweils zugehörige Mikrowellen-Sendeeinheit zu deaktivieren, um die Bestimmung der Fremdsignal-Amplitude zu verbessern.

Beispielsweise kann die Sequenz zum Aktivieren die folgenden Schritte nach einem Starten der Mikrowellenschranke oder nach einer Störung der Mikrowellenschranke aufweisen:
- Prüfen zumindest eines Teiles der verfügbaren Frequenz-Kanäle auf eine Amplitude eines Fremdsignals;
- Bestimmen des Signal-/Rauschverhältnis für den jeweiligen Frequenz-Kanal;
- wiederholen dieser Prüfung, bis ein Frequenz-Kanal gefunden ist, indem mit dem bestimmten Fremdsignal ein ausreichend hohes Signal-/Rauschverhältnis auf diesem Frequenz- Kanal erreicht werden kann;
- bestimmen dieses Frequenz-Kanals als Betriebs-Kanal für den Betrieb der ersten Mikrowellenschranke;
- zusätzlich kann die Information über die Amplitude der Fremdsignale in den unterschiedlichen verfügbaren Frequenz-Kanälen gespeichert werden.

Das Signal-/Rauschverhältnis kann durch Bestimmen der Fremdsignal-Amplitude im Verhältnis zu einem gespeicherten Empfangssignal und/oder zu einem, insbesondere mittels der Mikrowellen-Empfangseinheit, bestimmten Empfangssignal bei aktivierter Mikrowellen-Sendeeinheit bestimmt werden.

Bei der Bestimmung der Betriebs-Kanäle in einem System mit einer Vielzahl von Mikrowellenschranken können verfügbare Frequenz-Kanäle an einige der Vielzahl der Mikrowellenschranken auch doppelt vergeben werden. Dies ist insbesondere dann der Fall, wenn die betreffenden Mikrowellenschranken mit gleichem Betriebs-Kanal räumlich weit getrennt voneinander in dem System aus Mikrowellenschranken angeordnet sind.

In einer Sequenz zum Aktivieren der Mikrowellenschranke, in einem System aus einer Vielzahl von Mikrowellenschranken, können Mikrowellen-Sendeeinheiten von einzelnen Mikrowellenschranken oder von allen Mikrowellenschranken phasenweise deaktiviert und aktiviert werden.

Die Sequenz zum Aktivieren der Mikrowellenschranke kann auch während des laufenden Betriebs durchlaufen werden, um einen automatischen Wechsel der Frequenz-Kanäle zu erreichen, und damit Störungen durch Fremdsignale zu vermindern.

Für den Betrieb der ersten Mikrowellenschranke kann die Mikrowellen-Sendeeinheit der ersten Mikrowellenschranke eingerichtet sein, ein Mikrowellen-Signal mit einer Frequenz entsprechend dem übermittelten bestimmten Betriebs-Kanal zu generieren.

Beispielsweise können mit diesem Verfahren eine Vielzahl von benachbarten Mikrowellenschranken die jeweiligen Betriebs-Kanäle aus den Mikrowellen-Frequenz-Kanälen so bestimmen, dass benachbarte Mikrowellenschranken frequenzmäßig nicht benachbarte Mikrowellen-Frequenz-Kanäle zugeordnet werden, um die Störbeeinflussung zu minimieren. D. h. mit anderen Worten, benachbarte unabhängige Mikrowellenschranken senden nach der Bestimmung der jeweiligen Betriebs-Kanäle nicht in benachbarten Frequenz-Kanälen.

Vorteilhafterweise ist es bei diesem Verfahren nicht notwendig, genaue Vorkenntnis über den Einsatzzweck oder Fachwissen des Anwenders zu haben, um die Mikrowellen-Sendeeinheit und/oder die Mikrowellen-Empfangseinheit aufeinander passend einzustellen und damit Störungen zu vermindern. Die hier beschriebene automatische Bestimmung während einer Inbetriebnahme bzw. im Störungsfall mittels der Sequenz zur Aktivierung, entsprechend dem oben beschriebenen Verfahren, bietet hier deutlich mehr Komfort und Sicherheit.

Das Übertragen des bestimmten Betriebs-Kanals von der Mikrowellen-Empfangseinheit zur Mikrowellen-Sendeeinheit kann durch eine monodirektionale oder bidirektionale signalmäßige Kopplung, insbesondere mittels einer Kommunikationseinrichtung zur Kommunikation, der beiden Einheiten erfolgen. Eine solche signalmäßige Kopplung kann beispielsweise mittels einer Versorgungsleitung der Mikrowellen-Empfangseinheit bzw. der Mikrowellen-Sendeeinheit und/oder einer separaten kabelgebundenen Kopplung erfolgen und/oder mittels einer drahtlosen signalmäßigen Kopplung, wie einer Funkverbindung, z.B. via Bluetooth erfolgen.

Die Bestimmung des Betriebs-Kanals kann alternativ oder zusätzlich beim Vorliegen von Störungen erfolgen.

Diese signalmäßige Kopplung der beiden Einheiten kann eingerichtet sein, zusätzlich Diagnoseinformationen zu übertragen. Beispielsweise kann die Mikrowellen-Sendeeinheit bei einem Defekt auf der Seite der Mikrowellen-Sendeeinheit der Mikrowellen-Empfangseinheit eine Störungsmeldung übermitteln, sodass die Mikrowellen-Empfangseinheit einem Anwender eine Störmeldung signalisieren kann.

Vorteilhafterweise können, durch das hier beschriebene Verfahren zum automatischen Auswählen des Betriebs-Kanals und der signalmäßigen Kopplung der Mikrowellen-Sendeeinheit mit der Mikrowellen-Empfangseinheit, die unabhängig von der betriebsmäßigen Kopplung (via Mikrowellen) der beiden Einheiten erfolgen kann, Fehlschaltungen der jeweiligen Mikrowellenschranke aufgrund von anderen Hochfrequenz-Signalen vermieden und/oder vermindert werden.

Gemäß einem Aspekt wird vorgeschlagen, dass die jeweiligen Mikrowellenschranken eines Systems einer Vielzahl von Mikrowellenschranken mit einer Auswerte-Einheit gekoppelt sind, um die unterschiedliche Positionen zumindest eines Objektes und/oder eine Bewegung des Objektes zu detektieren. Alternativ oder zusätzlich kann eine Mikrowellenschranke der Vielzahl der Mikrowellenschranken eingerichtet sein, die unterschiedlichen Positionen zumindest eines Objektes und/oder eine Bewegung des Objektes zu detektieren.

Gemäß einem Aspekt wird vorgeschlagen, dass die Mikrowellen-Empfangseinheit der ersten Mikrowellenschranke und die Mikrowellen-Sendeeinheit der ersten Mikrowellenschranke, mittels einer Kommunikationseinheit, eingerichtet sind, signalmäßig miteinander gekoppelt zu werden, um den bestimmten Betriebs-Kanal von der Mikrowellen-Empfangseinheit der ersten Mikrowellenschranke an die Mikrowellen-Sendereinheit der ersten Mikrowellenschranke zu übertragen.

Dazu kann die Kommunikationseinheit zumindest zwei Teileinheiten aufweisen, wobei die Mikrowellen-Sendeeinheit die eine Teileinheit aufweist und die Mikrowellen-Empfangseinheit die entsprechende zweite Teileinheit aufweist.

Gemäß einem Aspekt wird vorgeschlagen, dass die Kommunikationseinheit eingerichtet ist, drahtgebunden und/oder drahtlos, insbesondere drahtlos via Bluetooth und/oder via Mikrowellen, insbesondere der Mikrowellen der ersten Mikrowellenschranke, und/oder WLAN signalmäßig miteinander gekoppelt zu werden.

Für die signalmäßige Kopplung mittels des Mikrowellen-Signals der ersten Mikrowellenschranke kann die Mikrowellen-Sendeeinheit eingerichtet sein, das Mikrowellen-Signal zu modulieren und/oder die Mikrowellen-Empfangseinheit eingerichtet sein, das modulierte Mikrowellen-Signal zu demodulieren.

Die signalmäßige Kopplung kann eingerichtet sein, monodirektionale oder bidirektionale Kommunikation zwischen der Mikrowellen-Empfangseinheit und der Mikrowellen-Sendeeinheit bereitzustellen.

Gemäß einem Aspekt wird vorgeschlagen, dass die erste Mikrowellenschranke räumlich benachbart zu zumindest einer zweiten Mikrowellenschranke angeordnet ist; und der Betriebs-Kanal der ersten Mikrowellenschranke bestimmt wird, während die Mikrowellen-Sendeeinheit der zweiten Mikrowellenschranke auf einem zweiten Betriebs-Kanal betrieben wird.

Gemäß einem Aspekt wird vorgeschlagen, dass die erste Mikrowellenschranke und die zweite Mikrowellenschranke beliebige Mikrowellenschranken in einem System aus einer Vielzahl von jeweils benachbart angeordneten Mikrowellenschranken sind.

Gemäß einem Aspekt wird vorgeschlagen, dass Stör-Strahlungen, die durch einen Betrieb der Sendeeinheit der zweiten Mikrowellenschranke auf dem zweiten Betriebs-Kanal hervorgerufen wird, von der ersten Mikrowellenschranke als Fremdsignal-Amplitude interpretiert wird, um den Betriebs-Kanal der ersten Mikrowellenschranke zu bestimmen. Der Betriebs-Kanal der ersten Mikrowellenschranke kann dann aus den verfügbaren Frequenz-Kanälen abhängig von der gemessenen Fremdsignal-Amplitude in den einzelnen Frequenz-Kanälen bestimmt werden.

Gemäß einem Aspekt wird vorgeschlagen, dass die zweite Mikrowellenschranke eingerichtet ist, eines der oben beschriebenen Verfahren, entsprechend der ersten Mikrowellenschranke, durchzuführen.

Gemäß einem Aspekt wird vorgeschlagen, dass die erste Mikrowellenschranke signalmäßig mit der zweiten Mikrowellenschranke gekoppelt ist, um den zweiten Betriebs-Kanal, mittels der ersten Mikrowellenschranke, zu bestimmen und/oder den zweiten Betriebskanal an die erste Mikrowellenschranke zu übertragen und/oder um eine von der Empfangseinheit der zweiten Mikrowellenschranke bestimmte Fremdsignal-Amplitude an die erste Mikrowellenschranke zu übertragen.

In einem System aus einer Vielzahl von Mikrowellenschranken kann die erste Mikrowellenschranke eingerichtet sein, insbesondere entsprechend einem Master-Slave Verfahren, die Betriebs-Kanäle zu bestimmen, nachdem die jeweiligen Mikrowellenschranken die bestimmten Fremdsignal-Amplituden an die erste Mikrowellenschranke übertragen hat. Die erste Mikrowellenschranke kann eingerichtet sein, die von ihr bestimmten Betriebs-Kanäle für die jeweiligen Mikrowellenschranken an die jeweiligen Mikrowellenschranken zu übertragen und die jeweiligen Mikrowellenschranken können eingerichtet sein, diese übertragenen Betriebs-Kanäle für den Betrieb der jeweiligen Mikrowellenschranke einzustellen. D. h. bei einer Vielzahl von Mikrowellenschranken in einem System können alle Mikrowellen-Sendereinheiten und Mikrowellen-Empfangseinheiten eingerichtet sein, mit allen anderen Mikrowellen-Sendeeinheiten und Mikrowellen-Empfangseinheiten zu kommunizieren. Insbesondere kann die Bestimmung des jeweiligen Betriebs-Kanals für die Vielzahl von Mikrowellenschranken erfolgen, nachdem durch die Vielzahl von Mikrowellenschranken Fremdsignal-Amplituden bestimmt wurden und an die erste Mikrowellenschranke übertragen wurden. Mit diesem Verfahren kann verhindert werden, dass Störsignale von anderen Mikrowellen-Sendeeinheiten oder sonstigen Mikrowellen-Quellen zu Fehlschaltungen führen.

Gemäß einem Aspekt wird vorgeschlagen, dass für das oben beschriebene Verfahren die Mikrowellen-Sendeeinheit und/oder die Mikrowellen-Empfangseinheit der zweiten Mikrowellenschranke, mittels einer Kommunikationseinheit, eingerichtet ist, signalmäßig miteinander gekoppelt zu werden, um den bestimmten Betriebs-Kanal von der Mikrowellen-Empfangseinheit der zweiten Mikrowellenschranke an die Mikrowellen-Sendereinheit der zweiten Mikrowellenschranke zu übermitteln

Gemäß einem Aspekt wird vorgeschlagen, dass die jeweils entsprechende Kommunikationseinheit der ersten Mikrowellenschranke und/oder die jeweils entsprechende Kommunikationseinheit der zweiten Mikrowellenschranke eingerichtet sind, via Bluetooth und/oder via Mikrowellen, insbesondere der jeweiligen Mikrowellenschranke, und/oder WLAN signalmäßig miteinander gekoppelt zu werden.

Es wird eine Mikrowellenschranke vorgeschlagen, mit
- einer Mikrowellen-Sendeeinheit;
- einer Mikrowellen-Empfangseinheit; und
- einer Kommunikationseinheit, die eingerichtet ist, die Mikrowellen-Empfangseinheit mit der Mikrowellen-Sendeeinheit signalmäßig zu koppeln, um einen Betriebs-Kanal für den Betrieb der Mikrowellenschranke von der Mikrowellen-Empfangseinheit an die Mikrowellen-Sendereinheit zu übertragen.

Dazu kann die Kommunikationseinheit zumindest zwei Teileinheiten aufweisen, wobei die Mikrowellen-Sendeeinheit die eine Teileinheit aufweist und die Mikrowellen-Empfangseinheit die entsprechende zweite Teileinheit aufweist.

Gemäß einem Aspekt wird vorgeschlagen, dass die Mikrowellen-Empfangseinheit der Mikrowellenschranke eingerichtet ist, eine Fremdsignal-Amplitude für zumindest einen Frequenz-Kanal einer Vielzahl verfügbaren Frequenz-Kanäle für den Betrieb der Mikrowellenschranke zu bestimmen.

Dazu kann die Mikrowellenschranke eingerichtet sein, für die Bestimmung der Fremdsignal-Amplitude die Mikrowellen-Sendeeinheit zu deaktivieren.

Gemäß einem Aspekt wird vorgeschlagen, dass die Mikrowellenschranke - eine Kommunikationseinheit aufweist, die eingerichtet ist, die Mikrowellen-Empfangseinheit mit einer weiteren Mikrowellenschranke signalmäßig zu koppeln, um einen zweiten Betriebs-Kanal für den Betrieb der weiteren Mikrowellenschranke, mittels der Mikrowellenschranke, festzulegen und/oder den zweiten Betriebskanal an die weitere Mikrowellenschranke zu übertragen und/oder um eine von der Empfangseinheit der weiteren Mikrowellenschranke bestimmte Fremdsignal-Amplitude an die erste Mikrowellenschranke zu übertragen. Auch die so eingerichtete Kommunikationseinheit kann, wie oben beschrieben, zumindest zwei Teileinheiten aufweisen.

Mittels der so eingerichteten Kommunikationseinheit kann eine ausgewählte Mikrowellen-Sendeeinheit und/oder eine ausgewählte Mikrowellen-Empfangseinheit eingerichtet sein, insbesondere entsprechend einem Master-Slave-Verfahren, die Betriebs-Kanäle für eine Vielzahl von Mikrowellenschranken zu bestimmen, und an die jeweiligen Mikrowellen-Sendeeinheiten der Vielzahl der Mikrowellenschranken zu übertragen.

Gemäß einem Aspekt wird vorgeschlagen, dass die Mikrowellenschranke eingerichtet ist, eines der oben beschriebenen Verfahren durchzuführen.

Gemäß einem Aspekt wird vorgeschlagen, dass die Mikrowellenschranke mittels der Kommunikationseinheit eingerichtet ist, eine Diagnoseinformation von der Mikrowellen-Sendeeinheit an die Mikrowellen-Empfangseinheit zu übertragen, um eine Fehlfunktion der Mikrowellenschranke zu vermeiden.

Es wird ein Computerprogramm vorgeschlagen, das Befehle umfasst, die bei der Ausführung des Programms durch einen Computer diesen veranlassen, eines der oben beschriebenen Verfahren auszuführen.

Mit einem solchen Computerprogramm kann das Verfahren einfach in unterschiedlichen Umgebungen und/oder Anwendungen und/oder Plattformen implementiert werden.

Es wird ein computerlesbarer Datenträger vorgeschlagen, auf dem das oben beschriebene Computerprogramm gespeichert ist.

Dadurch kann das Verfahren leicht auf unterschiedliche Steuer- und Kontrollgeräte implementiert werden.

Es wird eine Verwendung einer der oben beschriebenen Mikrowellenschranke zur Detektion einer Position eines Objektes vorgeschlagen, wobei das Objekt insbesondere Schüttgut ist. Durch die Verwendung der oben beschriebenen Mikrowellenschranke zur Überwachung einer Position eines Objektes kann ein Produktionsprozess besonders sicher überwacht werden.

Es sei noch angemerkt, dass die verschiedenen oben und/oder nachfolgend beschriebenen Ausführungsformen miteinander kombiniert werden können.

Im Folgenden werden Aspekte eines Mikrowellenschranken-Systems beschrieben, das mit dem Verfahren zum Auswählen eines Betriebs-Kanals für eine erste Mikrowellenschranke und/oder der oben beschriebenen Mikrowellenschranke insgesamt und/oder in Aspekten kombiniert werden kann.

Gemäß einem Aspekt wird ein Mikrowellenschranken-System mit einer ersten Mikrowellenschranke und einer zweiten Mikrowellenschranke vorgeschlagen. Die erste Mikrowellenschranke weist eine Mikrowellen-Sendeeinheit mit einem elektrisch abstimmbaren Mikrowellen-Generator auf und ist eingerichtet, mit einer wählbaren Mikrowellen-Frequenz betrieben zu werden. Die zweite Mikrowellenschranke weist eine Mikrowellen-Sendeeinheit mit einem elektrisch abstimmbaren Mikrowellen-Generator auf und ist eingerichtet, mit einer wählbaren Mikrowellen-Frequenz betrieben zu werden. Dabei ist das Mikrowellenschranken-System eingerichtet, Mikrowellen-Frequenz-Kanäle in einem verfügbaren Frequenzbereich für Mikrowellenschranken für eine bereitgestellte Anzahl von Mikrowellenschranken des Mikrowellenschranken-Systems zu bestimmen und den jeweiligen Mikrowellenschranken des Mikrowellenschranken-Systems jeweils einen Mikrowellen-Frequenz-Kanal so zuzuordnen, dass eine gegenseitige Störung der Mikrowellenschranken minimiert wird.

Dabei kann der verfügbare Frequenzbereich in dem Mikrowellenschranken-System gespeichert sein und/oder für einen Betrieb des Mikrowellenschranken-Systems bereitgestellt werden.

Ein Mikrowellenschranken-System kann zumindest zwei Mikrowellenschranken aufweisen, um beispielsweise zwei Positionen eines Objektes innerhalb des Mikrowellenschranken-Systems zu detektieren, bzw. zu bestimmen.

Mit einer Vielzahl von Mikrowellenschranken innerhalb eines Mikrowellenschranken-Systems kann auch eine Bewegung eines Objektes und/oder eine Gestaltsänderung eines Objektes, beispielsweise mit einem Objekt in Form eines Füllgut, bestimmt werden, indem eine zeitliche Abfolge von Dämpfungen des Mikrowellen-Signals innerhalb der Vielzahl von Mikrowellenschranken bestimmt wird.

Eine Mikrowellenschranke kann eine Mikrowellen-Sendeeinheit aufweisen, die ein Mikrowellen-Signal generiert und in Richtung auf die Empfangseinheit ausstrahlt, und eine räumlich davon getrennte Empfangseinheit aufweisen, die jeweils einander zugeordnet sind. Zwischen der Mikrowellen-Sendeeinheit und der zugeordneten Empfangseinheit kann ein Kopplungspfad definiert werden, der den räumlichen Bereich charakterisiert, indem die Mikrowellen-Sendeeinheit und die Empfangseinheit mittels des Mikrowellen-Signals gekoppelt sind. Wird der direkte Übertragungsweg von der Mikrowellen-Sendeeinheit zu der Empfangseinheit durch ein Objekt oder durch einen Füllstand eines Mediums in einem Behälter unterbrochen, macht sich dies durch einen fehlenden oder reduzierten Empfangspegel in der Empfangseinheit bemerkbar. Das Abfallen des Empfangspegels kann in der Empfangseinheit detektiert werden und in ein Schaltsignal umgewandelt werden.

Dabei ist das Mikrowellen-Signal ein Signal, das auf der jeweiligen Mikrowellen-Frequenz der jeweiligen Mikrowellenschranke basiert und von der Mikrowellen-Sendeeinheit ausgesendet wird und von der jeweiligen Empfangseinheit empfangen wird, um eine Dämpfung des Mikrowellen-Signals im Kopplungspfad, insbesondere mittels der jeweiligen Empfangseinheit, zu bestimmen, um beispielsweise eine Position eines Objektes innerhalb des Kopplungspfades zu bestimmen.

Eine Anwesenheit eines Objektes innerhalb des Kopplung-Pfads kann bestimmt werden, indem, abhängig von einer Interaktion des Objekts in einem Kopplungs-Pfad zwischen der Mikrowellen-Sendeeinheit und der Empfangseinheit, eine Dämpfung des Mikrowellen-Signals, basierend auf der jeweiligen Mikrowellenfrequenz der jeweiligen Mikrowellenschranke, detektiert wird.

Die jeweilige Mikrowellen-Sendeeinheit einer jeweiligen Mikrowellenschranke kann eingerichtet sein, mittels einer elektrischen Abstimmung eines Mikrowellen-Generators der Mikrowellen-Sendeeinheit, mit einer wählbaren Mikrowellen-Frequenz betrieben zu werden. Zusätzlich oder alternativ kann die jeweilige Empfangseinheit einer jeweiligen Mikrowellenschranke eingerichtet sein, mittels einer elektrischen Abstimmung eines Mikrowellen-Generators der Empfangseinheit, mit einer wählbaren Mikrowellen-Frequenz betrieben zu werden, um ein von der Empfangseinheit empfangenes Mikrowellen-Signal selektiv, insbesondere in Bezug auf einen Mikrowellen-Frequenz-Kanal, zu betreiben und/oder das Mikrowellen-Signal entsprechend selektiv zu bestimmen.

Ein verfügbarer Frequenzbereich, der von Mikrowellenschranken benutzt werden kann, beschränkt sich im Allgemeinen auf lizenzfreie Frequenzbänder, die in Europa für lizenzfreie "Short-Range Devices" oder UWB-Geräte (UWB: Ultra-Wideband) reguliert sind. Für die Anwendung der Mikrowellenschranke sinnvoll nutzbare Frequenzbänder liegen beispielsweise im Bereich von 2,4 GHz bis 2,4835 GHz; und/oder 5,725 GHz bis 5,875 GHz; und/oder 24 GHz bis 24,25 GHz; und/oder 57 bis 64 GHz; und/oder 61 GHz bis 61,5 GHz; und/oder 122 GHz bis 123 GHz; und/oder 174,8 GHz bis 182 GHz; und/oder 185 GHz bis 190 GHz; und/oder 231,5 GHz bis 250 GHz und/oder 244 GHz bis 246 GHz.

Die zur Verfügung stehenden und oben angegebenen Frequenzbänder sind typischerweise ausreichend breit, um darin Mikrowellen-Frequenz-Kanäle für eine Vielzahl von Mikrowellenschranken zu definieren.

Beispielsweise kann das Frequenzband von 24 GHz bis 24,25 GHz mit einer Anzahl von Mikrowellen-Frequenz-Kanälen n = 20 zwischen einer unteren Frequenz fu= 24 GHz und einer oberen Frequenz fo = 24,25 GHz Mikrowellen-Frequenz-Kanäle der Breite Δf = 12,5 MHz definiert werden.

Durch eine Verteilung einer Vielzahl von Mikrowellen-Frequenz-Kanälen auf eine Vielzahl von Mikrowellenschranken kann eine gegenseitige Störbeeinflussung der jeweiligen Mikrowellenschranken in einem Mikrowellenschranken-System, entsprechend einer Anwendung eines Frequenz-Multiplexverfahrens (FDM = Frequency-Division Multiplexing), verringert werden.

Mit einem solchen Mikrowellenschranken-System kann eine Störbeeinflussung von mehreren Mikrowellenschranken verringert werden, die benachbart, insbesondere in geringem Abstand zueinander, betrieben werden. Denn bei benachbart betriebenen Mikrowellenschranken kann eine Mikrowellen-Sendeeinheit in eine Empfangseinheit einer benachbarten Mikrowellenschranke einstrahlen. Durch unterschiedliche Mikrowellen-Frequenz-Kanäle für unterschiedliche Mikrowellenschranken eines Mikrowellenschranken-Systems können Störabstände der einzelnen Mikrowellenschranken erhöht werden, da die jeweilige Mikrowellenschranke, insbesondere mittels der Empfangseinheit, das jeweils von der Mikrowellen-Sendeeinheit ausgestrahlte Mikrowellen-Signal selektiv, entsprechend dem zugeordneten Mikrowellen-Frequenz-Kanal, bestimmen kann, was wiederum eine Wahrscheinlichkeit und eine Häufigkeit von Fehlschaltungen oder Fehlfunktionen einer Mikrowellenschranke in dieser speziellen Konstellation des Mikrowellenschranken-Systems reduziert.

Um die Störbeeinflussung zu minimieren, können die Mikrowellen-Frequenz-Kanäle so gewählt werden, dass räumlich benachbarten Mikrowellenschranken frequenzmäßig nicht benachbarte Mikrowellen-Frequenz-Kanäle zugeordnet werden. D. h. mit anderen Worten, räumlich benachbarte unabhängige Mikrowellenschranken senden in frequenzmäßig nicht benachbarten Übertragungskanälen.

Gemäß einem Aspekt wird vorgeschlagen, dass die jeweilige Mikrowellenschranke des Mikrowellenschranken-Systems einen wählbaren Mikrowellen-Frequenz-Kanal aufweist in dem die jeweilige Mikrowellen-Sendeeinheit das Mikrowellen-Signal entsprechend dem gewählten Mikrowellen-Frequenz-Kanal aussendet und/oder die jeweilige Empfangseinheit das Mikrowellen-Signal entsprechend dem gewählten Mikrowellen-Frequenz-Kanal selektiv bestimmt.

Mittels einer jeweiligen Mikrowellenschranke, die mit einer wählbaren Mikrowellen-Frequenz für das Mikrowellen-Signal betrieben werden kann, kann eine höhere Flexibilität, insbesondere für eine Neukonfiguration von einer bestehenden Anordnung von Mikrowellenschranken in einem Mikrowellenschranken-System erreicht werden.

Die wählbare Mikrowellen-Frequenz für den Betrieb der jeweiligen Mikrowellenschranke, insbesondere mittels einer elektrische Abstimmung von Oszillatoren für das Generieren der Mikrowelle und/oder selektieren von Mikrowellen-Frequenz-Kanälen, ermöglicht einem Anwender für jede Mikrowellenschranke einen geeigneten Kanal zu wählen und jederzeit verändern zu können. Somit kann eine optimale Konfiguration von mehreren benachbarten Mikrowellenschranken in Bezug auf Störsicherheit gewährleistet werden.

Weiterhin kann durch den Einsatz von elektrisch abstimmbaren Oszillatoren für das Generieren von Mikrowellensignalen, ein Hardwareaufwand des Mikrowellenschranken-Systems reduziert werden.

Vorteilhafterweise kann ein solcher elektrisch abstimmbarer Oszillator eingerichtet sein, eine Frequenz temperaturstabil zu generieren, um den zur Verfügung stehenden Frequenzbereich in eine möglichst hohe Anzahl von Mikrowellen-Frequenz-Kanälen zu unterteilen, um die Mikrowellenschranken dann zuverlässig, insbesondere bei Temperaturschwankungen, innerhalb entsprechend schmaler Kanäle zu betreiben.

Vorteilhafterweise kann ein elektrisch abstimmbarer Oszillator eingerichtet sein, sehr schnell auf einzelne Mikrowellen-Frequenz-Kanäle abgestimmt zu werden. Ein solcher elektrisch abstimmbare Oszillator für das Generieren einer Mikrowellen-Frequenz ist in einem Ausführungsbeispiel unten beschrieben.

Gemäß einem Aspekt wird vorgeschlagen, dass die erste Mikrowellenschranke und die zweite Mikrowellenschranke jeweils eine Empfangseinheit aufweist und die jeweilige Empfangseinheit mit der jeweiligen Mikrowellen-Sendeeinheit mittels eines Mikrowellen-Signals, basierend auf dem jeweiligen Mikrowellen-Frequenzkanal, gekoppelt ist, um einen Kopplungs-Pfad zwischen der jeweiligen Mikrowellen-Sendeeinheit und der jeweiligen Empfangseinheit aufzubauen. Insbesondere kann das Mikrowellenschranken-System eingerichtet sein, eine Dämpfung des Mikrowellen-Signals in dem jeweiligen Kopplungs-Pfad zu bestimmten.

Gemäß einem Aspekt wird vorgeschlagen, dass die Mikrowellen-Sendeeinheit zumindest einer Mikrowellenschranke des Mikrowellenschranken-Systems eingerichtet ist und/oder eine Empfangseinheit der zumindest einen Mikrowellenschranke eingerichtet ist, mittels eines Mikrowellen-Transceivers, sowohl als Mikrowellen-Sendeeinheit als auch Empfangseinheit betrieben zu werden.

Mittels eines solchen Mikrowellen-Transceivers kann die jeweilige Mikrowellenschranke das Mikrowellen-Signal in unterschiedliche Richtungen des Kopplung-Pfades abstrahlen und empfangen, um eine gegenseitige Störung von Mikrowellenschranken zu vermindern, ohne mechanisch die Anordnung der Mikrowellenschranke zu verändern.

Gemäß einem Aspekt wird vorgeschlagen, dass die Empfangseinheit zumindest einer Mikrowellenschranke eingerichtet ist, die Dämpfung des Mikrowellen-Signals basierend auf einem, insbesondere mittels der Empfangseinheit selektierten, Mikrowellen-Frequenz-Kanal zu bestimmen.

Dadurch kann die Mikrowellenschranke Mikrowellen-Signale einer anderen Mikrowellenschranke, deren Betrieb auf einem anderen Mikrowellen-Frequenz-Kanal basiert, herausfiltern, um eine gegenseitige Störung der jeweiligen Mikrowellenschranken zu vermindern. Eine solche Selektion des Mikrowellen-Frequenz-Kanals durch die Empfangseinheit kann mittels eines Zwischenfrequenz-Filters durchgeführt werden.

Gemäß einem Aspekt wird vorgeschlagen, dass das Mikrowellenschranken-System eingerichtet ist, abhängig von einer bereitgestellten Anordnung der jeweiligen Mikrowellenschranken in dem Mikrowellenschranken-System den jeweiligen Mikrowellenschranken einen jeweiligen Mikrowellen-Frequenz-Kanal so zuzuordnen, dass räumlich angrenzenden Mikrowellenschranken des Mikrowellenschranken-Systems Frequenz-Kanäle zugeordnet werden, dass eine gegenseitige Störung durch Mikrowellen-Einstrahlung räumlich benachbarter Mikrowellenschranken in dem Mikrowellenschranken-System vermindert wird.

Gemäß einem Aspekt wird vorgeschlagen, dass das Mikrowellenschranken-System eingerichtet ist, abhängig von der bereitgestellten Anordnung der jeweiligen Mikrowellenschranken in dem Mikrowellenschranken-System den Mikrowellenschranken Mikrowellen-Frequenz-Kanäle so zuzuordnen, dass jeweils räumlich aneinander angrenzenden Mikrowellenschranken des Mikrowellenschranken-Systems frequenzmäßig nicht angrenzende Mikrowellen-Frequenz-Kanäle zugeordnet werden.

Gemäß einem Aspekt wird vorgeschlagen, dass zumindest eine der Mikrowellenschranken eingerichtet ist, basierend auf einem modulierten Mikrowellen-Signal betrieben zu werden, um eine gegenseitige Störung von zumindest zwei Mikrowellenschranken, die räumlich benachbart betrieben werden, in dem Mikrowellenschranken-System zu vermindern.

Dazu kann die Mikrowellen-Sendeeinheit der jeweiligen Mikrowellenschranke eingerichtet sein, basierend auf dem Mikrowellen-Frequenz-Kanal, ein moduliertes Mikrowellen-Signal zu generieren und/oder die jeweilige Empfangseinheit eingerichtet sein, basierend auf einem modulierten Mikrowellen-Signal, die Dämpfung des Mikrowellen-Signals zu bestimmen.

Gemäß einem Aspekt wird vorgeschlagen, dass die Mikrowellen-Sendeeinheit der zumindest einen Mikrowellenschranke eingerichtet ist, ein Mikrowellen-Signal zu generieren, das moduliert ist, und eine mit der so eingerichteten Sendeeinheit gekoppelten Empfangseinheit eingerichtet ist, eine Dämpfung des Mikrowellen-Signals, basierend auf dem modulierten Mikrowellen-Signal, selektiv zu detektieren.

Entsprechend diesem Aspekt kann mittels des Mikrowellen-Signals eine Kennung von der Mikrowellen-Sendeeinheit an die Empfangseinheit übertragen werden, wobei die jeweilige Empfangseinheit eingerichtet ist die korrekte Kennung zu überprüfen, um eine gegenseitige Störung von Mikrowellenschranken zu vermindern. Dazu kann die jeweilige Mikrowellenschranke eingerichtet sein, basierend auf dem, mit der Kennung modulierten Mikrowellen-Signal, betrieben zu werden.

Gemäß einem Aspekt wird vorgeschlagen, dass das Mikrowellen-Signal in Bezug auf eine Amplitude und/oder eine Frequenz und/oder eine Phase einer Frequenz des Mikrowellen-Signals moduliert ist; und/oder das Mikrowellen-Signal zeitlich moduliert ist.

Gemäß einem Aspekt wird vorgeschlagen, dass das jeweilige Mikrowellen-Signal zumindest einer Mikrowellenschranke des Mikrowellenschranken-Systems mit einem Code moduliert ist, und die jeweilige Mikrowellenschranke eingerichtet ist, basierend auf dem, mit dem Code modulierten Mikrowellen-Signal, betrieben zu werden.

Gemäß einem Aspekt wird vorgeschlagen, dass eine einzelne Empfangseinheit sowohl die Empfangseinheit der ersten Mikrowellenschranke als auch die Empfangseinheit der zweiten Mikrowellenschranke ist.

Mit einer einzelnen Empfangseinheit für eine Vielzahl von Mikrowellen-Sendeeinheiten, die jeweils auf die einzelne Empfangseinheit ausgerichtet ist, kann ein Mikrowellenschranken-System mit einem reduzierten Hardwareaufwand konfiguriert werden. Beispielsweise können vier Mikrowellen-Sendeeinheiten mit einer Empfangseinheit kombiniert werden, um vier Mikrowellenschranken zu realisieren. Mit einer solchen Konfiguration von Mikrowellenschranken kann eine Position eines Objektes im Raum oder ein Füllstand in einem Behälter bestimmt werden. Der Hardwareaufwand ist jedoch in diesem Beispiel um insgesamt drei Empfangseinheiten reduziert. Jeder Mikrowellen-Sendeeinheit kann bei dieser Konfiguration ein eigener Mikrowellen-Frequenz-Kanal zugeordnet werden, wobei die Empfangseinheit beispielsweise sequenziell, oder mit einer beliebigen anderen Zugriffsart, auf die einzelnen zugeordneten Mikrowellen-Frequenzkanäle abgestimmt wird, um das von den einzelnen Mikrowellen-Sendeeinheiten abgestrahlte Mikrowellen-Signal, insbesondere in Bezug auf seine Leistung, zu bestimmen. Dadurch kann das abgestrahlte Mikrowellen-Signal bestimmt werden, ohne von den Mikrowellen-Sendeeinheiten, die auf anderen Mikrowellen-Frequenz-Kanälen betrieben werden, gestört zu werden. Die gemeinsame Empfangseinheit kann die bestimmten Mikrowellen-Signale, entsprechend den einzelnen Mikrowellen-Frequenz-Kanälen, an einen Nutzer des Mikrowellenschranken-Systems melden oder anderweitig ausgeben. Wird der Übertragungsweg von einer beliebigen Mikrowellen-Sendeeinheit zu der gemeinsam genutzten Empfangseinheit durch ein Objekt oder einen Füllstand eines Mediums unterbrochen oder gedämpft, verringert sich die empfangene Leistung des Mikrowellen-Signals und beim Unterschreiten einer Schwelle für diese Leistung kann die Empfangseinheit eingerichtet sein, ein Schaltsignal zu generieren.

Gemäß einem Aspekt wird vorgeschlagen, dass das Mikrowellenschranken-System eingerichtet ist, die Mikrowellen-Frequenz-Kanäle den jeweiligen Mikrowellen-Sendeeinheiten der jeweiligen Mikrowellenschranken, und insbesondere den Mikrowellen-Empfangseinheiten, des Mikrowellenschranken-Systems zeitlich aufeinanderfolgend und/oder zeitlich zyklisch zuzuordnen.

Dabei kann eine zeitlich zyklische Zuordnung eine Zuordnung sein, die jeweils nach Ablauf eines Zeitintervalls erfolgt.

Gemäß einem Aspekt wird vorgeschlagen, dass bei dem Mikrowellenschranken-System zumindest eine Mikrowellenschranke eingerichtet ist, die Mikrowellen-Sendeeinheit mit der gekoppelten Empfangseinheit, mittels des modulierten Mikrowellen-Signals, signalmäßig zu koppeln, um Informationen von der Mikrowellen-Sendeeinheit zu der jeweils zugeordneten Empfangseinheit zu übertragen.

Dabei unterscheidet sich die signalmäßige Kopplung der Mikrowellen-Sendeeinheit von der Kopplung, die eine betriebsmäßige Kopplung ist, in dem bei der signalmäßigen Kopplung zusätzliche Informationen, die über den Betrieb einer Mikrowellenschranke hinausgehen an die Empfängereinheit übertragen wird. Insbesondere kann die Information, die an die Empfangseinheit von der Mikrowellen-Sendeeinheit übertragen wird, ein Betriebsstatus der Mikrowellen-Sendeeinheit und/oder eine Diagnoseinformation sein, um eine Fehlfunktion der Mikrowellenschranke zu vermeiden.

Mit anderen Worten kann die Anordnung einer Mikrowellenschranke mit räumlich getrennt angeordneter Mikrowellen-Sendeeinheit und Empfangseinheit zur Datenübertragung entsprechend einer Richtfunkstrecke verwendet werden. Ein auf das Mikrowellen-Signal der Mikrowellen-Sendeeinheit aufmoduliertes Datensignal kann in der Empfängereinheit wieder demoduliert und ausgewertet werden. So lassen sich beispielsweise bei freier Übertragungsstrecke Diagnosedaten, wie z.B. eine Sendeleistung der Mikrowellen-Sendeeinheit, ein Wert einer aktuellen Versorgungsspannung, etc., von der Mikrowellen-Sendeeinheit übertragen werden und mittels der Empfangseinheit ausgewertet werden. Ein eventueller Ausfall der Mikrowellen-Sendeeinheit oder eine Degeneration der Übertragungsstrecke, kann so frühzeitig erkannt werden und wird somit nicht als "belegte Übertragungsstecke" bei fehlendem Signal am Empfänger missinterpretiert. Eine Degeneration des Übertragungsweges kann vorliegen, wenn z.B. ein Baum in die Übertragungsstrecke wächst und mit der Zeit das Sendesignal dadurch zunehmend gedämpft wird.

Bei der Übertragung der Sendeleistung kann in der Empfangseinheit mittels der bestimmten Empfangsleistung einfach die Dämpfung auf dem Kopplungs-Pfad bestimmt werden. Somit lassen sich Rückschlüsse auf das Objekt im Übertragungsweg der Schranke ziehen, z.B. auf die Größe des Objekts oder dessen Transparenz für das Mikrowellensignal.

Gemäß einem Aspekt wird vorgeschlagen, dass das modulierte Mikrowellen-Signal eine Information über eine ausgesendete Mikrowellen-Leistung der Mikrowellen-Sendeeinheit aufweist, um durch die Übertragung der Mikrowellen-Leistung an die jeweilige Empfangseinheit die Dämpfung im Kopplungs-Pfad zwischen der Mikrowellen-Sendeeinheit und der Empfangseinheit zu bestimmen.

Wenn die Mikrowellen-Leistung an die Empfangseinheit übertragen wird, lassen sich Rückschlüsse auf das Objekt im Übertragungsweg der Schranke ziehen, z.B. Rückschlüsse in Bezug auf die Größe des Objekts oder dessen Transparenz für das Mikrowellensignal.

Gemäß einem Aspekt wird vorgeschlagen, dass beide Funktions-Einheiten der jeweiligen Mikrowellenschranke, d. h. sowohl die Mikrowellen-Sendeeinheit als auch die jeweilige Empfangseinheit der Mikrowellenschranke als sogenannte Transceiver aufgebaut werden. In diesem Fall ist eine bidirektionale Datenübertragung, insbesondere basierend auf unterschiedlichen Mikrowellen-Frequenz-Kanälen, möglich. Beide Funktions-Einheiten der jeweiligen Mikrowellenschranke können sich in diesem Fall beispielsweise gegenseitig überwachen. Fällt eine dieser Funktions-Einheiten aus, kann eine Missinterpretation eines belegten Kopplung-Pfades, bzw. einer Übertragungsstrecke, verhindert werden.

Gemäß einem Aspekt wird vorgeschlagen, dass die jeweiligen Mikrowellenschranken des Mikrowellenschranken-Systems mit einer Auswerte-Einheit des Mikrowellenschranken-Systems gekoppelt sind, um die unterschiedliche Positionen zumindest eines Objektes und/oder eine Bewegung des Objektes zu detektieren.

Es wird ein Verfahren zum Betreiben eines Mikrowellenschranken-Systems vorgeschlagen, das eine erste Mikrowellenschranke aufweist, wobei die erste Mikrowellenschranke eingerichtet ist, mit einer wählbaren Mikrowellen-Frequenz betrieben zu werden und zumindest eine zweite Mikrowellenschranke aufweist, wobei die zweite Mikrowellenschranke eingerichtet ist, mit einer wählbaren Mikrowellen-Frequenz betrieben zu werden, mit den Schritten:
- Bereitstellen einer Anzahl von Mikrowellenschranken, die in dem Mikrowellenschranken-System betrieben werden;
- Bereitstellen eines verfügbaren Frequenzbereichs für den Betrieb des Mikrowellenschranken-Systems;
- Bestimmen von verfügbaren Mikrowellen-Frequenz-Kanälen für den Betrieb des Mikrowellenschranken-Systems;
- Zuordnen der verfügbaren Mikrowellen-Frequenz-Kanälen zu der Anzahl von Mikrowellenschranken in so einer Weise, dass eine gegenseitige Störung der Mikrowellenschranken verringert wird.

Gemäß einem Aspekt wird vorgeschlagen, dass das Verfahren zusätzlich die Schritte aufweist:
- Bereitstellen einer Anordnung der jeweiligen Mikrowellenschranken in dem Mikrowellenschranken-System;
- Zuordnen der Mikrowellen-Frequenz-Kanäle zu räumlich angrenzenden Mikrowellenschranken, so dass eine gegenseitige Störung durch Mikrowellen-Einstrahlung räumlich benachbarter Mikrowellenschranken in dem Mikrowellenschranken-System vermindert wird; und zusätzlich oder optional:
- Zuordnen der Mikrowellen-Frequenz-Kanäle an die jeweiligen Mikrowellenschranken der Anzahl der Mikrowellenschranken so, dass jeweils räumlich aneinander angrenzenden Mikrowellenschranken des Mikrowellenschranken-Systems frequenzmäßig nicht angrenzende Frequenz-Kanäle zugeordnet werden.

Gemäß einem Aspekt wird vorgeschlagen, dass in einem der oben beschriebenen Verfahren die Mikrowellen-Frequenz-Kanäle des zugewiesenen und/oder verfügbaren Mikrowellen-Frequenzspektrums so auf die jeweiligen Mikrowellenschranken verteilt werden, dass räumlich benachbarte Mikrowellenschranken Mikrowellen-Frequenz-Kanäle zugewiesen werden, die frequenzmäßig möglichst weit auseinanderliegen, um eine gegenseitige Störung der zumindest zwei Mikrowellenschranken in dem Mikrowellenschranken-System zu minimieren.

Es sei noch angemerkt, dass die verschiedenen oben und/oder nachfolgend beschriebenen Ausführungsformen miteinander kombiniert werden können.

### Ausführungsbeispiele

Ausführungsbeispiele der Erfindung werden mit Bezug auf die Figuren 1 bis 3 dargestellt und im Folgenden näher erläutert. Es zeigt:
- Figur 1: eine Mikrowellenschranke mit Kommunikationseinheit;
- Figur 2: ein Leistungsdiagramm von Frequenz-Kanälen; und
- Figur 3: ein System aus Mikrowellenschranken mit Kommunikationseinheiten.

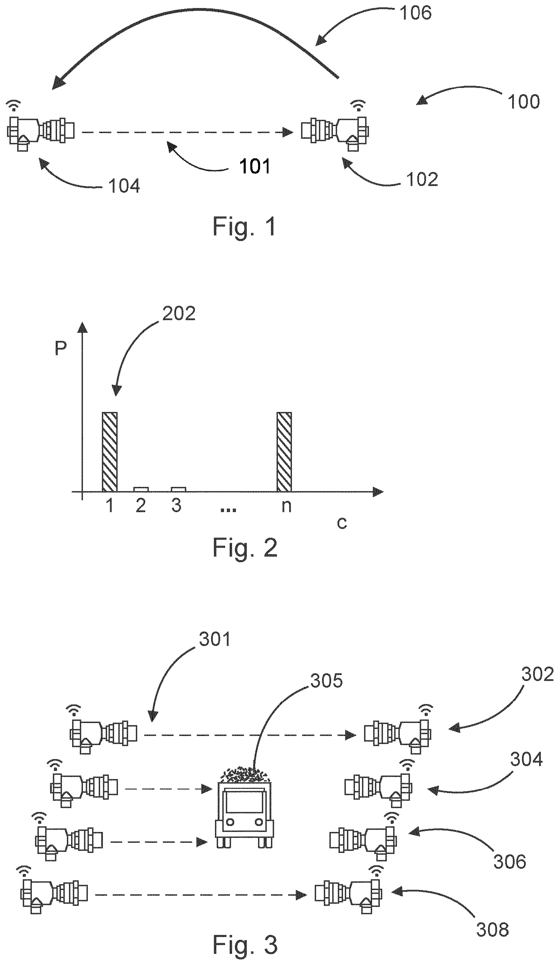

Die Figur 1 skizziert schematisch eine Mikrowellenschranke 100 mit einer Mikrowellen-Sendeeinheit 104 und einer Mikrowellen-Empfangseinheit 102, die mit einer Kommunikationseinheit eingerichtet ist, die Mikrowellen-Empfangseinheit 102 mit der Mikrowellen-Sendeeinheit 104 signalmäßig zu koppeln 106, um einen Betriebs-Kanal für den Betrieb der Mikrowellenschranke 100 von der Mikrowellen-Empfangseinheit 102 an die Mikrowellen-Sendereinheit 104 zu übertragen. Die Mikrowellen-Empfangseinheit 102 und die Mikrowellen-Sendereinheit 104 sind für den Betrieb der Mikrowellenschranke über einen Kopplungs-Pfad 101, in dem die Mikrowellenstrahlung von der Mikrowellen-Sendeeinheit 104 auf die Mikrowellen-Empfangseinheit 102 gerichtet ist, betriebsmäßig gekoppelt.

In einer Startsequenz kann die Mikrowellen-Empfangseinheit 102 einen Teil oder alle verfügbaren Frequenz-Kanäle scannen, während die Mikrowellen-Sendeeinheit 104 deaktiviert ist, um in zumindest einem Teil der verfügbaren Frequenz-Kanäle eine jeweilige Fremdsignal-Amplitude zu bestimmen. Die bestimmte Fremdsignal-Amplitude kann dabei von anderen benachbarten Mikrowellenschranken verursacht sein oder von anderen Funkdiensten stammen. Beide Ursachen würden den Betrieb der Mikrowellenschranke jedoch stören können. Wenn die Mikrowellen-Empfangseinheit 102 einen geeigneten Betriebs-Kanal bestimmt hat, um Störungen bei einem betreiben der Mikrowellenschranke durch Fremdsignale zu minimieren, überträgt sie den Betriebs-Kanal an die Mikrowellen-Sendeeinheit 104.

Die Figur 2 skizziert schematisch, ein Leistungsdiagramm, indem über eine Vielzahl n von verfügbaren Frequenz-Kanälen c 202 eine bestimmte Mikrowellen-Leistung P, die beispielsweise von der Mikrowellen-Empfangseinheit 102 einer Mikrowellenschranke bestimmt wurde, aufgetragen ist. Dabei ist ein hoher Leistungswert im ersten und im n-ten Kanal c 202 aufgetragen, die beispielsweise jeweils von einer Mikrowellen-Einstrahlung einer anderen Mikrowellenschranke verursacht sein können. Mittels der Bestimmung einer solchen Mikrowellen-Leistung P kann für jeden, oder nur für einen Teil, der Vielzahl von verfügbaren Frequenzkanälen c 202 eine Fremdsignal-Amplitude bestimmt werden, um einen Betriebs-Kanal für den Betrieb der Mikrowellenschranke zu bestimmen, sodass Störungen bei dem Betreiben der Mikrowellenschranke durch Fremdsignale minimiert werden. Beispielsweise kann der Betriebs-Kanal mit einem verfügbaren Frequenz-Kanal bestimmt werden, der eine minimale Fremdsignal-Amplitude aufweist.

Die Figur 3 skizziert schematisch ein System aus vier Mikrowellenschranken 302, 304, 306 und 308 mit einer ersten Mikrowellenschranke 302 und einer zweiten Mikrowellenschranke 304 innerhalb eines Systems aus vier Mikrowellenschranken 302, 304, 306 und 308, die benachbart betrieben werden.

Dabei kann die jeweilige Mikrowellenschranke 302, 304, 306 und 308 eine Mikrowellen-Sendeeinheit mit einem elektrisch abstimmbaren Mikrowellen-Generator aufweisen und ist eingerichtet, mit einer wählbaren Mikrowellen-Frequenz betrieben zu werden. Die Mikrowellen-Empfangseinheit kann entsprechend mit einem elektrisch abstimmbaren Mikrowellen-Generator eingerichtet sein, um ein Mikrowellen-Signal der jeweiligen Mikrowellen-Sendeeinheit selektiv, in Bezug auf eine detektierte Mikrowellen-Frequenz, zu bestimmen.

Eine Position eines Objektes 305 kann, je nach Position des Objektes 305 in den jeweiligen Kopplungs-Pfaden 301 der jeweiligen Mikrowellenschranken 302, 304, 306 und 308 des Systems aus Mikrowellenschranken 302, 304, 306 und 308 detektiert werden.

Dabei kann das Objekt 305 mit einem jeweiligen Kopplungs-Pfad 301 zwischen der jeweiligen Mikrowellen-Sendeeinheit und einer jeweils zugeordneten Empfangseinheit so wechselwirken, dass ein von der jeweiligen Mikrowellen-Sendeeinheit in Richtung der jeweiligen Empfangseinheit ausgesandte Mikrowellen-Signal gedämpft wird.

Die vier Mikrowellenschranken 302, 304, 306 und 308 sind mittels einer Kommunikationseinheit eingerichtet, einen bestimmten Betriebs-Kanal von der Mikrowellen-Empfangseinheit der jeweiligen Mikrowellenschranke 302, 304, 306 und 308 an die jeweilige Mikrowellen-Sendeeinheit zu übertragen und zumindest die jeweilige Mikrowellen-Empfangseinheiten der vier Mikrowellenschranken 302, 304, 306 und 308 sind eingerichtet, signalmäßig miteinander gekoppelt zu werden, um, entsprechend einem Master-Slave Verfahren, die jeweiligen Betriebs-Kanäle der vier Mikrowellenschranken 302, 304, 306 und 308 zu bestimmen und Störungen bei einem Betreiben des Systems aus den vier Mikrowellenschranken 302, 304, 306 und 308 zu minimieren.

Dazu kann die jeweilige Mikrowellenschranke 302, 304, 306 und 308 eingerichtet sein, insbesondere in einer Startsequenz zum Auswählen eines Betriebs-Kanals für die jeweilige Mikrowellenschranke, für zumindest einen Teil einer gespeicherten Vielzahl von verfügbaren Frequenz-Kanälen für Mikrowellenschranken eine Fremdsignal-Amplitude mittels der jeweiligen Mikrowellen-Empfangseinheit zu bestimmen. In dieser Startsequenz kann die jeweilige Mikrowellen-Empfangseinheit alle verfügbaren Frequenz-Kanäle scannen, während die jeweiligen, oder alle Mikrowellen-Sendeeinheiten, deaktiviert sind, um in zumindest einem Teil der verfügbaren Frequenz-Kanäle eine jeweilige Fremdsignal-Amplitude zu bestimmen.

In einem Beispiel, wie dem Diagramm der Figur 2, kann das Signal in dem Frequenz-Kanal 1 bzw. n entweder von anderen benachbarten Mikrowellenschranken verursacht sein oder von anderen Funkdiensten stammen. Beide können den Betrieb des Systems aus Mikrowellenschranken jedoch stören.

Dadurch, dass die jeweiligen Mikrowellenschranken 302, 304, 306 und 308 mit ihrer Kommunikationseinrichtung eingerichtet sind, signalmäßig miteinander gekoppelt zu werden, kann ein jeweiliger Betriebs-Kanal für die jeweilige Mikrowellenschranke, basierend auf der zumindest einen bestimmten Fremdsignal-Amplitude der verfügbaren Frequenz-Kanäle bestimmt werden, um Störungen bei einem Betreiben der ersten Mikrowellenschranke durch ein Fremdsignal zu minimieren. Das Übertragen des bestimmten Betriebs-Kanals an die jeweilige Mikrowellen-Sendeeinheit der Mikrowellenschranken 302, 304, 306 und 308 und die signalmäßige Kopplung der Mikrowellenschranken 302, 304, 306 und 308 untereinander kann, drahtgebunden und/oder drahtlos, insbesondere drahtlos via Bluetooth und/oder via Mikrowellen, insbesondere der Mikrowellen der Mikrowellenschranke, und/oder WLAN erfolgen.

Die Fremdsignale können Signale sein, die von der jeweiligen Mikrowellen-Empfangseinheit detektiert werden, und beispielsweise von einer weiteren Mikrowellen-Sendeeinheit einer weiteren Mikrowellenschranke und/oder von einer anderen Mikrowellen-Quelle generiert werden.

Indem die Mikrowellenschranken 302, 304, 306 und 308 signalmäßig, beispielsweise in einem Master-Slave Verfahren und/oder mittels einer separaten Auswerteeinheit miteinander gekoppelt sind, kann für jede Mikrowellenschranke ein entsprechender Betriebs-Kanal bestimmt werden, um Störungen bei dem Betreiben des Systems aus vier Mikrowellenschranken 302, 304, 306 und 308 durch ein Fremdsignal zu minimieren, und an die jeweilige Mikrowellen-Sendeeinheit übertragen werden.

Die jeweils mit den Mikrowellenschranken 302, 304, 306 und 308 bestimmten Fremdsignale können an die Auswerteeinheit oder einen Master übertragenen werden, um die Betriebs-Kanäle für die jeweiligen Mikrowellenschranken 302, 304, 306 und 308 festzulegen und an die jeweilige Mikrowellenschranke und/oder die jeweiligen Mikrowellen-Sendeeinheiten zu übertragen.

D. h. die jeweilige Mikrowellenschranke kann eingerichtet sein in einem System aus Mikrowellenschranken mit allen Mikrowellen-Sendeeinheiten und allen Mikrowellen-Empfangseinheiten des Systems von Mikrowellenschranken signalmäßig gekoppelt zu sein, um untereinander zu kommunizieren. Eine der Mikrowellen-Empfangseinheiten kann als Master eingerichtet sein, die Betriebs-Kanäle für die jeweiligen Mikrowellenschranken 302, 304, 306 und 308 zu bestimmen und an die jeweiligen Mikrowellenschranken 302, 304, 306 und 308 bzw. deren Mikrowellen-Sendeeinheiten zu übertragen. Insbesondere kann für die Bestimmung der jeweiligen Betriebs-Kanäle für die jeweiligen Mikrowellenschranken 302, 304, 306 und 308 die bestimmten Fremdsignal-Amplituden berücksichtigt werden.

Dabei können Stör-Strahlungen, die durch einen Betrieb einer der Mikrowellen-Sendeeinheiten der Mikrowellenschranken hervorgerufen wird, als Fremdsignal-Amplitude interpretiert werden.

Beispielsweise können die jeweiligen Betriebs-Kanäle so zugeordnet werden, dass räumlich angrenzenden Mikrowellenschranken frequenzmäßig nicht angrenzende Frequenz-Kanäle zugeordnet werden. Mittels eines Optimierungsverfahrens können die Betriebs-Kanäle, unter Berücksichtigung von Fremdsignal-Amplituden und Stör-Strahlungen beteiligter Mikrowellen-Sendeeinheiten, darüber hinaus weiter verbessert bestimmt werden, um Störungen zu minimieren. Somit kann verhindert werden, dass Störsignale von anderen Mikrowellen-Sendeeinheit den oder sonstigen Mikrowellen-Quellen zu Fehlschaltungen des Systems aus Mikrowellenschranken führen.

## Patentansprüche

1. Verfahren zum Auswählen eines Betriebs-Kanals für eine erste Mikrowellenschranke (100), aufweisend eine Mikrowellen-Sendeeinheit (104) und eine Mikrowellen-Empfangseinheit (102), mit:
Bereitstellen einer Vielzahl verfügbarer Frequenz-Kanäle (202) für Mikrowellenschranken;
Bestimmen einer Fremdsignal-Amplitude für zumindest einen Frequenz-Kanal der Vielzahl der verfügbaren Frequenz-Kanäle mittels der Mikrowellen-Empfangseinheit (102);
Bestimmen eines Betriebs-Kanals aus den verfügbaren Frequenz-Kanälen (202), basierend auf der zumindest einen bestimmten Fremdsignal-Amplitude der verfügbaren Frequenz-Kanäle (202), um Störungen bei einem Betreiben der ersten Mikrowellenschranke (100) durch ein Fremdsignal zu vermindern; und
Übertragen des bestimmten Betriebs-Kanals von der Mikrowellen-Empfangseinheit (102) an die Mikrowellen-Sendeeinheit (104), zum Betreiben der ersten Mikrowellenschranke (100) auf dem Betriebs-Kanal.

2. Verfahren gemäß Anspruch 1, wobei die Mikrowellen-Empfangseinheit (102) der ersten Mikrowellenschranke (100) und die Mikrowellen-Sendeeinheit (104) der ersten Mikrowellenschranke (100), mittels einer Kommunikationseinheit, eingerichtet sind, signalmäßig miteinander gekoppelt zu werden, um den bestimmten Betriebs-Kanal von der Mikrowellen-Empfangseinheit (102) der ersten Mikrowellenschranke an die Mikrowellen-Sendereinheit (104) der ersten Mikrowellenschranke (100) zu übertragen.

3. Verfahren gemäß Anspruch 2, wobei die Kommunikationseinheit eingerichtet ist, drahtgebunden und/oder drahtlos, insbesondere drahtlos via Bluetooth und/oder via Mikrowellen, insbesondere der Mikrowellen der ersten Mikrowellenschranke, und/oder WLAN signalmäßig miteinander gekoppelt zu werden.

4. Verfahren gemäß einem der vorhergehenden Ansprüche, wobei die erste Mikrowellenschranke (302) räumlich benachbart zu zumindest einer zweiten Mikrowellenschranke (304) angeordnet ist; und der Betriebs-Kanal der ersten Mikrowellenschranke (302) bestimmt wird, während die Mikrowellen-Sendeeinheit der zweiten Mikrowellenschranke auf einem zweiten Betriebs-Kanal betrieben wird.

5. Verfahren gemäß Anspruch 4, wobei Stör-Strahlungen, die durch einen Betrieb der Sendeeinheit der zweiten Mikrowellenschranke (304) auf dem zweiten Betriebs-Kanal hervorgerufen wird, von der ersten Mikrowellenschranke (302) als Fremdsignal-Amplitude interpretiert wird, um den Betriebs-Kanal der ersten Mikrowellenschranke (302) zu bestimmen.

6. Verfahren gemäß Anspruch 4 oder 5, wobei die zweite Mikrowellenschranke (304) eingerichtet ist, eines der Verfahren gemäß den Ansprüchen 1 bis 3, entsprechend der ersten Mikrowellenschranke (302), durchzuführen.

7. Verfahren gemäß Anspruch 4 bis 6, wobei die erste Mikrowellenschranke (302) signalmäßig mit der zweiten Mikrowellenschranke (304) gekoppelt ist, um den zweiten Betriebs-Kanal, mittels der ersten Mikrowellenschranke (302), zu bestimmen und/oder den zweiten Betriebskanal an die erste Mikrowellenschranke (302) zu übertragen und/oder um eine von der Empfangseinheit der zweiten Mikrowellenschranke (304) bestimmte Fremdsignal-Amplitude an die erste Mikrowellenschranke (302) zu übertragen.

8. Mikrowellenschranke (100), aufweisend,
eine Mikrowellen-Sendeeinheit (104);
eine Mikrowellen-Empfangseinheit (102);
eine Kommunikationseinheit, die eingerichtet ist, die Mikrowellen-Empfangseinheit (102) mit der Mikrowellen-Sendeeinheit (104) signalmäßig zu koppeln, um einen Betriebs-Kanal für den Betrieb der Mikrowellenschranke (100) von der Mikrowellen-Empfangseinheit (102) an die Mikrowellen-Sendereinheit (104) zu übertragen.

9. Mikrowellenschranke (100) gemäß Anspruch 8, wobei die Mikrowellen-Empfangseinheit (102) eingerichtet ist, eine Fremdsignal-Amplitude für zumindest einen Frequenz-Kanal (202) einer Vielzahl verfügbaren Frequenz-Kanäle für den Betrieb der Mikrowellenschranke (100) zu bestimmen.

10. Mikrowellenschranke (100, 302) gemäß Anspruch 8 oder 9, aufweisend,
eine Kommunikationseinheit, die eingerichtet ist, die Mikrowellen-Empfangseinheit (102) mit einer weiteren Mikrowellenschranke (304) signalmäßig zu koppeln, um einen zweiten Betriebs-Kanal für den Betrieb der weiteren Mikrowellenschranke (304), mittels der Mikrowellenschranke (100, 302), festzulegen und/oder den zweiten Betriebskanal an die weitere Mikrowellenschranke (304) zu übertragen und/oder um eine von der Empfangseinheit der weiteren Mikrowellenschranke (304) bestimmte Fremdsignal-Amplitude an die erste Mikrowellenschranke (100, 302) zu übertragen.

11. Mikrowellenschranke (100, 302) gemäß einem der Ansprüche 8 bis 10, die eingerichtet ist, ein Verfahren gemäß einem der Ansprüche 1 bis 7 durchzuführen.

12. Mikrowellenschranke (100, 302) gemäß einem der Ansprüche 8 bis 11, die mittels der Kommunikationseinheit eingerichtet ist, eine Diagnoseinformation von der Mikrowellen-Sendeeinheit (102) an die Mikrowellen-Empfangseinheit (104) zu übertragen, um eine Fehlfunktion der Mikrowellenschranke (100, 302) zu vermeiden.

13. Computerprogramm, umfassend Befehle, die bei der Ausführung des Programms durch einen Computer diesen veranlassen, das Verfahren gemäß Anspruch 1 bis 7 auszuführen.

14. Computerlesbarer Datenträger, auf dem das Computerprogramm gemäß Anspruch 13 gespeichert ist.

15. Verwendung einer Mikrowellenschranke (100, 302) gemäß einem der Ansprüche 8 bis 11 zur Detektion einer Position eines Objektes, wobei das Objekt insbesondere Schüttgut ist.
